# FASCICULE DE BREVET EUROPEEN

(11) **EP 2 670 905 B1**
(45) Date de publication et mention de la délivrance du brevet: **02.09.2015**
(21) Numéro de dépôt: 12701358.9
(22) Date de dépôt: 31.01.2012
(51) Int. Cl.: B29D 30/06, B29D 30/40, B29K 9/06, B29K 21/00, C09J 7/04, D06M 15/233, D06M 15/227, C09J 171/12, B29L 30/00, B60C 9/00, B29K 71/00, D06M 15/53, C09J 153/02, B29B 15/12

(54) **COMPOSITE DE CAOUTCHOUC RENFORCE D'UN MATERIAU TEXTILE POURVU D'UNE COLLE THERMOPLASTIQUE**
DURCH EIN TEXTILMATERIAL VERSTÄRKTE UND MIT EINEM WÄRMEHÄRTENDEN BINDEMITTEL AUSGESTATTETE KAUTSCHUKZUSAMMENSETZUNG
RUBBER COMPOSITE REINFORCED WITH A TEXTILE MATERIAL PROVIDED WITH A THERMOPLASTIC ADHESIVE

(30) Priorité: 03.02.2011 FR 1150856
(43) Date de publication de la demande: 11.12.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); RIGO, Sébastien, F-63040 Clermont-Ferrand Cedex 9 (FR); CUSTODERO, Emmanuel, F-63040 Clermont-Ferrand Cedex 9 (FR)
(74) Mandataire: Desbordes, Guillaume
(86) Numéro de dépôt international: PCT/EP2012/051515
(87) Numéro de publication internationale: WO 2012/104279

(56) Documents cités:
- WO-A1-00/24840
- WO-A1-2011/051204
- US-A1- 2004 261 928
- US-A1- 2009 093 584

## Description

### DOMAINE DE L'INVENTION

Le domaine de la présente invention est celui des composites de caoutchouc, des matériaux textiles et des compositions adhésives ou « colles » destinées à faire adhérer de tels matériaux textiles à des matrices de caoutchouc insaturé telles que celles utilisées couramment dans les articles finis ou produits semi-finis en caoutchouc.

La présente invention est plus particulièrement relative à des composites de caoutchouc renforcés de matériaux textiles encollés par des couches adhésives à base de polymères thermoplastiques, notamment à des matériaux textiles encollés susceptibles de renforcer des structures de pneumatiques.

### ETAT DE LA TECHNIQUE

Il est connu de très longue date de faire adhérer des matériaux textiles tels que des fibres ou des câblés textiles, par exemple en polyamide ou en polyester, à des matrices de caoutchouc insaturé tel que diénique, en utilisant des colles textiles dites "RFL" (pour résorcinol-formaldéhyde-latex) comportant au moins un latex d'élastomère diénique tel que du caoutchouc naturel et une résine phénolique thermodurcissable. Une telle colle est notamment décrite dans le document US 2004/261928.

Ces colles présentent comme inconvénient connu de comporter comme substances de base le formaldéhyde (ou formol) ainsi que le résorcinol qu'il est souhaitable de supprimer à terme des compositions adhésives, en raison de l'évolution récente de la réglementation européenne sur ce type de produits.

D'autres solutions ont été décrites dans les documents US2009/093594 et WO00/24840.

Ainsi, les concepteurs d'articles et composites en caoutchouc, notamment les manufacturiers de pneumatiques, ont pour objectif aujourd'hui de trouver de nouveaux systèmes adhésifs ou de nouveaux composites renforcés de matériaux textiles qui permettent de pallier l'inconvénient précité.

### BRAVE DESCRIPTION DE L'INVENTION

Or, au cours de leurs recherches, les Demanderesses ont découvert un composite de caoutchouc nouveau, renforcé d'un matériau textile pourvu d'un revêtement adhésif spécifique du type thermoplastique, qui permet de répondre à l'objectif ci-dessus.

En conséquence, un premier objet de l'invention concerne un composite de caoutchouc renforcé d'un matériau textile dont au moins une partie est revêtue d'une couche adhésive, caractérisé en ce que ladite couche comporte une composition adhésive qui est à base d'au moins un élastomère thermoplastique styrénique insaturé et un poly(p-phénylène éther) et ne comprenant pas de couche d'un polymère thermoplastique dont la température de transition vitreuse est positive entre le matériau textile et la couche adhésive.

On connait du document WO2011/051204 un renfort composite comportant :
- un ou plusieurs fîl(s) de renforcement ;
- recouvrant individuellement ledit fil, chaque fil ou collectivement plusieurs fils, une première couche d'un polymère thermoplastique dont la température de transition vitreuse est positive ;
- recouvrant la première couche, une deuxième couche d'une composition comportant un poly(p-phénylène éther) ("PPE") et un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide.

Contrairement au renfort composite de WO2011/051204, le composite selon l'invention ne comprend pas de couche d'un polymère thermoplastique dont la température de transition vitreuse est positive entre le matériau textile et la couche adhésive.

On a constaté de manière inattendue que cette couche adhésive spécifique permettait d'assurer une adhésion directe et performante du matériau textile à une matrice ou composition de caoutchouc insaturé telle que celles couramment utilisées dans des pneumatiques.

L'invention concerne tout composite (article fini ou produit semi-fini) en caoutchouc, avant comme après cuisson (pour réticulation ou vulcanisation finale), en particulier tout pneumatique.

Parmi les pneumatiques de l'invention, on citera notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil, autres véhicules de transport ou de manutention.

L'invention concerne également l'utilisation, pour le collage d'un matériau textile à un caoutchouc insaturé, d'une composition adhésive telle que définie ci-dessus.

L'invention concerne également un procédé pour fabriquer un composite selon l'invention, ledit procédé comportant au moins les étapes suivantes :
- combiner au moins une portion d'un matériau textile de départ tel que défini ci-dessus, la composition adhésive étant à l'état solide, avec une composition de caoutchouc réticulable, pour former un composite de caoutchouc renforcé du matériau textile ;
- réticuler par cuisson le composite ainsi formé.

L'invention ainsi que ses avantages seront aisément compris à la lumière de la description et des exemples de réalisation qui suivent, ainsi que de la figure unique relative à ces exemples qui schématise, en coupe radiale, un pneumatique à armature de carcasse radiale conforme à l'invention, incorporant un composite et matériau textile selon l'invention.

### DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le matériau textile du composite de l'invention est susceptible d'adhérer directement par cuisson (réticulation) à une matrice de caoutchouc insaturé (c'est-à-dire, pour rappel, pourvu d'insaturations éthyléniques), c'est-à-dire qu'il est encollé, revêtu au moins en partie d'une couche adhésive comportant au moins une composition adhésive, à l'état liquide ou solide, qui est à base d'au moins un élastomère thermoplastique styrénique insaturé et un poly(p-phénylène éther), constituants qui vont être décrits en détail ci-après.

Par l'expression «composition à base de », il faut bien entendu comprendre une composition comportant le mélange et/ou le produit de réaction *in situ* des différents constituants de base utilisés pour cette composition, certains d'entre eux pouvant être destinés à réagir ou susceptibles de réagir entre eux ou avec leur environnement chimique proche, au moins en partie, lors des différentes phases de fabrication du matériau textile, des composites ou articles finis comportant de tels composites, en particulier au cours de l'étape de cuisson finale.

On rappellera tout d'abord que les élastomères thermoplastiques styréniques (en abrégé « TPS ») sont des élastomères thermoplastiques se présentant sous la forme de copolymères blocs à base de styrène. Leur température de transition vitreuse (Tg) est de préférence négative, plus préférentiellement inférieure à - 20°C, en particulier inférieure à - 30°C.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylèné). C'est la raison pour laquelle, de manière connue, les copolymères TPS se caractérisent généralement par la présence de deux pics de transition vitreuse, le premier pic (température la plus basse, préférentiellement négative) étant relatif à la séquence élastomère du copolymère TPS, le second pic (température la plus haute, positive, typiquement aux alentours de 80°C ou plus) étant relatif à la partie thermoplastique (blocs styrène) du copolymère TPS.

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène, unités styrène et unités butadiène pour un copolymère blocs styrène/ butadiène/ styrène). En cela, bien entendu, ils ne doivent pas être confondus avec des élastomères copolymères diéniques statistiques tels que par exemple des caoutchoucs SIR (copolymères styrène-isoprène) ou SBR (copolymères styrène-butadiène) qui de manière bien connue n'ont aucun caractère thermoplastique.

Ceci étant rappelé, une caractéristique essentielle de l'élastomère TPS utilisé dans le cadre de la présente invention est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

De préférence, l'élastomère insaturé est un copolymère comportant comme unités de base des blocs styrène (c'est-à-dire polystyrène) et des blocs diène (c'est-à-dire polydiène), notamment des blocs isoprène (polyisoprène) ou butadiène (polybutadiène).

Un tel élastomère TPS est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement, cet élastomère insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/ / butadiène/ isoprène/ styrène (SBIS) et les mélanges de ces copolymères ; plus particulièrement, il s'agit d'un SBS ou SIS, notamment d'un SBS.

Selon un autre mode de réalisation préférentiel, le taux de styrène, dans l'élastomère TPS insaturé, est compris entre 10 et 60% en masse. En dessous de 10%, il existe un risque de mise en oeuvre plus difficile de la colle en raison d'un caractère thermoplastique qui diminue, tandis qu'au-delà de 60% pourrait être pénalisée l'adhésion du matériau textile au caoutchouc insaturé (e.g. élastomère diénique tel que caoutchouc naturel) auquel est destiné le matériau textile. Pour toutes ces raisons, le taux de styrène est plus préférentiellement compris dans un domaine de 15 à 55% en masse.

La masse moléculaire moyenne en nombre (notée Mn) de l'élastomère TPS est préférentiellement comprise entre 5 000 et 500 000 g/mol, plus préférentiellement comprise entre 7 000 et 450 000 g/mol.

Des élastomères TPS insaturés tels que par exemple SB, SBS, SBBS, SIS ou SBIS sont bien connus et disponibles commercialement, par exemple auprès de la société Kraton sous la dénomination "Kraton D" (e.g., produits D1116, D1118, D1155, D1161, D1163 pour des exemples d'élastomères SB, SIS et SBS), auprès de la société Dynasol sous la dénomination "Calprene" (e.g., produits C405, C411, C412 pour des exemples d'élastomères SBS) ou encore auprès de la société Asahi sous la dénomination "Tuftec" (e.g., produit P1500 pour un exemple d'élastomère SBBS).

Selon un mode de réalisation particulièrement préférentiel, l'élastomère TPS insaturé utilisé dans le cadre de la présente invention est un élastomère TPS fonctionnalisé, porteur de groupes fonctionnels choisis parmi les groupes ou fonctions époxyde, carboxyle, anhydride d'acide ou ester d'acide.

Plus préférentiellement encore, cet élastomère TPS insaturé est un élastomère époxydé, c'est-à-dire porteur d'un ou plusieurs groupes époxydes. Des élastomères TPS insaturés et époxydés, tels que par exemple SBS, sont connus et disponibles commercialement, par exemple auprès de la société Daicel sous la dénomination"Epofriend".

La composition adhésive a pour autre caractéristique essentielle de comporter, en combinaison avec l'élastomère TPS précédemment décrit, au moins un polymère de poly(p-phénylène éther) (ou poly(1,4-phénylène-éther)) (noté en abrégé "PPE").

Les polymères thermoplastiques PPE sont bien connus de l'homme du métier, ce sont des résines solides à température ambiante (20°C). Préférentiellement, le PPE utilisé ici possède une température de transition vitreuse qui est supérieure à 150°C, plus préférentiellement supérieure à 180°C. Quant à sa masse moléculaire moyenne en nombre (Mn), elle est préférentiellement comprise entre 5 000 et 100 000 g/mol.

A titres d'exemples non limitatifs de polymères PPE utilisables dans le composite de l'invention, on peut citer notamment ceux choisis dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy-1,4-phénylène-éther), poly(2-éthyl-6-stéaryloxy-1,4-phénylène-éther), poly(2,6-dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl-1,4-phénylène-éther), leurs copolymères respectifs, et les mélanges de ces homopolymères ou copolymères.

Selon un mode de réalisation particulier et préférentiel, le PPE utilisé est le poly(2,6-diméthyl-1,4-phénylène-éther) également dénommé parfois polyphénylène oxyde (ou, en abrégé, "PPO"). De tels PPE ou PPO commercialement disponibles sont par exemple les PPE de dénomination "Xyron S202" de la société Asahi Kasei, ou les PPE de dénomination "Noryl SA120" de la société Sabic.

L'homme du métier saura ajuster la formulation de la composition adhésive à la lumière de la description et des exemples de réalisation qui suivent, en fonction des applications particulières visées.

Pour une efficacité optimale, on préfère que le rapport pondéral (PPE/ TPS insaturé) soit compris entre 0,02 et 2,0, plus préférentiellement soit compris entre 0,05 et 1,2, en particulier dans un domaine de 0,1 à 0,6. Selon un autre mode de réalisation préférentiel, la quantité de polymère PPE est ajustée de telle manière que le taux pondéral de PPE soit compris entre 0,05 et 5 fois, plus préférentiellement entre 0,1 et 2 fois le taux pondéral de styrène présent dans l'élastomère TPS lui-même.

En dessous des minima préconisés ci-dessus, l'adhésion du matériau textile au caoutchouc peut être diminuée alors qu'au-delà des maxima indiqués, il existe un risque de fragilisation de la couche adhésive. Pour toutes ces raisons, le taux pondéral de PPE est plus préférentiellement encore compris entre 0,2 et 1,5 fois le taux pondéral de styrène dans l'élastomère TPS. Le taux de styrène des élastomères TPS est une donnée bien connue, disponible auprès des fabricants, mesurable notamment par RMN.

La Tg de l'élastomère TPS et du PPE est mesurée de manière connue par DSC (*Differential Scanning Calorimetry),* par exemple et sauf indications différentes spécifiées dans la présente demande, selon la norme ASTM D3418 de 1999.

La masse moléculaire moyenne en nombre (Mn) est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Bien que les deux constituants décrits ci-dessus (TPS insaturé et PPE) soient suffisants à eux seuls pour conférer au matériau textile du composite de l'invention de très hautes propriétés d'adhésion à un caoutchouc insaturé tel que du caoutchouc naturel, certains additifs conventionnels tels que colorant, charge, plastifiant, tackifiant, antioxydant ou autre stabilisant, système de réticulation ou vulcanisation tel que soufre et accélérateur, pourraient être éventuellement ajoutés à la composition adhésive précédemment décrite.

Par définition, dans la présente demande, on entend par « textile » ou « matériau textile », de manière bien connue de l'homme du métier, tout matériau en une matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou une fibre, un ruban ou film, ou également en un tissu réalisé à partir de fils ou fibres, par exemple d'un tissu tramé avec fils de chaîne et fils de trame, ou encore d'un tissu croisé avec fils croisés.

De préférence, ce matériau textile est choisi dans le groupe constitué par les films, les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par « fil » ou « fibre », on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieure à 3 mm.

Ce fil ou cette fibre peut prendre tout forme connue, il peut d'agir par exemple d'un mono filament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Par « film » ou « ruban », on entend de manière générale un élément longiligne, de grande longueur relativement à sa section transversale, dont la section transversale présente un rapport de forme (largeur sur épaisseur) supérieur à 5, de préférence supérieur à 10, et dont la largeur est préférentiellement au moins égale à 3 mm, plus préférentiellement au moins égale à 5 mm.

Bien que des matériaux en matière non polymérique (par exemple en matière minérale telle que du verre ou en matière organique non polymérique telle que carbone) soient compris dans la définition de matériau textile, l'invention est préférentiellement mise en oeuvre avec des matériaux en matière polymérique, du type thermoplastique comme non thermoplastique.

A titre d'exemples de matières polymériques du type non thermoplastiques, on citera par exemple l'aramide (polyamide aromatique) et la cellulose, naturelle comme artificielle, telle que coton ou rayonne.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Dans le cas d'un matériau textile en matière thermoplastique, cette dernière présente de préférence une Tg qui est positive, plus préférentiellement supérieure à +20°C, encore plus préférentiellement supérieure à +30°C. D'autre part, la température de fusion (notée Tf) de ce polymère thermoplastique est préférentiellement supérieure à 100°C, plus préférentiellement supérieure à 150°C, notamment supérieure à 200°C.

Le matériau textile du composite de l'invention peut être préparé selon un procédé d'encollage caractérisé en ce qu'il comporte au moins une étape de dépôt, sur le matériau textile de départ (initial), d'une composition adhésive ou colle telle que décrite précédemment, solide ou liquide selon les cas, les deux constituants de base, à savoir élastomère TPS insaturé et PPE, pouvant être par exemple à l'état solide, à l'état fondu ou encore en solution dans un solvant organique approprié.

L'étape de dépôt de la composition adhésive sur le matériau textile initial (matériau textile de départ) peut être réalisée selon toute méthode appropriée, que la couche adhésive finale visée consiste en un revêtement fin comme en une couche épaisse enrobant totalement le matériau textile ; l'épaisseur de la couche adhésive pourra varier dans une très large mesure en fonction des conditions particulières de réalisation de l'invention.

Le dépôt d'un revêtement fin, typiquement d'épaisseur comprise dans un domaine de 0,02 µm à 1 µm, pourra être conduit par exemple avec une colle à l'état fondu (procédé dit « à chaud ») ou avantageusement à l'état liquide (procédé dit « à froid » nécessitant l'emploi d'un solvant organique), par toute technique d'enduction connue telle que par exemple pulvérisation, imprégnation par trempage, défilement dans un bain ou autre technique équivalente de dépôt de film de colle mince ou ultra-mince, ou encore par une combinaison d'une ou plusieurs de ces techniques.

A titre d'exemple plus particulier, le matériau textile, par exemple un retors en polyamide passe, à une vitesse de quelques m/min ou dizaines de m/min et sur une longueur de quelques cm ou dizaines de cm, dans un bain rempli du mélange de PPE et d'élastomère TPS époxydé, dilué (par exemple de 5 à 10% en poids) dans du toluène, voire simplement entre deux feutrines de laine pressées par une masse de 1 kg et imbibées en continu par ledit mélange liquide, afin de recouvrir ainsi le retors d'une couche adhésive fine voire ultra-fine.

Le dépôt d'un revêtement plus épais, typiquement d'épaisseur comprise entre 1 µm et 2 mm, pourra être conduit avec une composition adhésive à l'état fondu (procédé « à chaud » ne nécessitant pas l'emploi d'un solvant organique), préférentiellement dans ce cas par une technique de gainage du matériau textile de départ, avantageusement par passage à travers une tête d'extrusion. Une telle étape de gainage est conduite de manière connue de l'homme du métier, en ligne et en continu ; elle consiste par exemple simplement à faire passer le fil de renforcement, à travers des filières de diamètre adapté, dans une tête d'extrusion chauffée à une température appropriée.

A titre d'exemple plus particulier, le matériau textile, par exemple un retors en polyamide passe sur une ligne d'extrusion-gainage comportant deux filières, une première filière (contre-filière ou filière amont, et une filière aval), disposées toutes deux dans une tête d'extrusion. Un mélange de TPS époxydé et PPE, fondu dans l'extrudeuse, recouvre ainsi le retors, par le biais de la tête de gainage, à une vitesse de défilement du fil typiquement égale à plusieurs dizaines de m/min, pour un débit de pompe d'extrusion typiquement de plusieurs dizaines de g/min. Le mélange de TPS et PPE peut être réalisé in situ, dans la même tête d'extrusion, les deux composants étant alors apportés par exemple par deux trémies d'alimentation différentes ; selon un autre exemple de réalisation possible, TPS et PPE peuvent être également utilisés sous forme d'un mélange préalablement fabriqué, par exemple sous forme de granules, une seule trémie d'alimentation étant alors suffisante. En sortie de ce gainage, le matériau textile ainsi revêtu peut être immergé dans un bac rempli d'eau froide, pour refroidissement avant passage de la bobine de réception à l'étuve pour séchage.

Dans les cas où un solvant organique est utilisé, le taux global des deux constituants de base (TPS plus PPE), dans la colle à l'état liquide, est de préférence compris dans un domaine de 1 à 20%, plus préférentiellement de 2 à 15%, par exemple dans un domaine de 5 à 10% (% en poids de colle liquide). Tout solvant organique apte à dissoudre l'élastomère TPS et le PPE est utilisable ; on utilise de préférence du toluène.

Selon un mode de réalisation préférentiel, après l'étape précédemment décrite de dépôt de la composition adhésive, et le cas échéant élimination du solvant organique, une étape de traitement thermique est conduite sur le matériau textile ainsi encollé, par exemple par traversée d'un four-tunnel, typiquement de plusieurs mètres de long, tel que ceux utilisés couramment pour traitement thermique après encollage des matériaux textiles par une colle RFL.

Ce traitement thermique est plus préférentiellement conduit à l'air, en d'autres termes il s'agit d'un traitement thermo-oxydant. La température de traitement est de préférence comprise entre 150°C et 350°C. Les durées de traitement sont de quelques secondes à quelques minutes selon les cas (par exemple entre 10 s et 10 min), étant entendu que la durée du traitement sera d'autant plus courte que la température sera élevée, et que le traitement thermique ne doit évidemment pas conduire à une refusion ou même un ramollissement excessif des matières thermoplastiques utilisées.

L'homme du métier saura ajuster, le cas échéant, la température et la durée du traitement thermique ci-dessus, en fonction des conditions particulières de mise en oeuvre de l'invention, notamment de la nature exacte du matériau textile fabriqué, en particulier selon que l'on traite des monofilaments, des fibres multifilamentaires, des retors constitués de plusieurs fibres retordues ensemble, ou des films. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

En sortie de traitement thermique, le matériau textile selon l'invention est avantageusement refroidi, par exemple à l'air, pour éviter d'éventuels problèmes de collage parasite lors de son enroulement sur la bobine de réception finale.

Ainsi encollé, terminé de fabrication, le matériau textile est utilisable directement, c'est-à-dire sans nécessiter un quelconque système adhésif supplémentaire, comme élément de renforcement d'une matrice de caoutchouc insaturé tel qu'un caoutchouc diène, pour constituer un composite de caoutchouc renforcé d'un matériau textile conforme à l'invention, tel que par exemple un pneumatique. Son revêtement adhésif, réticulable au soufre grâce à la présence de l'élastomère TPS insaturé, est apte à assurer le collage direct du matériau textile à une matrice de caoutchouc insaturé à l'état cru.

La présente invention s'applique au cas où le revêtement adhésif du matériau textile est à encore à l'état liquide (soit à l'état fondu, soit en solution dans un solvant organique), comme au cas où ce revêtement adhésif est à l'état solide (soit solidifié, soit séché c'est-à-dire débarrassé du solvant organique, et le cas échéant traité thermiquement).

L'invention s'applique également aux cas où le matériau textile de départ a été préadhérisé par un primaire d'adhésion tel que ceux couramment utilisés par l'homme du métier pour le pré-encollage de certaines fibres textiles (e.g. fibres en PET ou en aramide), avant leur encollage ultérieur et définitif avec une colle RFL conventionnelle.

De préférence, dans le matériau textile selon l'invention prêt à l'emploi, c'est-à-dire terminé de fabrication, le taux de composition adhésive à l'état sec représente entre 2% et 20%, plus préférentiellement entre 5% et 15% en poids par rapport au matériau textile de départ (non encollé).

Le composite de caoutchouc de l'invention peut être préparé selon un procédé comportant au moins les étapes suivantes :
- au cours d'une première étape, combiner au moins une portion du matériau textile de départ, sa composition adhésive étant alors à l'état solide, avec une composition de caoutchouc réticulable, pour former un composite de caoutchouc renforcé du matériau textile ;
- puis, au cours d'une deuxième étape, réticuler par cuisson, de préférence sous pression, le composite ainsi formé.

L'invention s'applique donc à tout type de composite de caoutchouc susceptible d'être obtenu par le procédé précédemment décrit, comportant au moins une matrice en composition de caoutchouc réticulable, diénique ou non diénique, liée au matériau textile via une interphase adhésive à base de la composition adhésive précédemment décrite. Le caoutchouc du composite de l'invention est préférentiellement un caoutchouc diénique.

Par élastomère (ou indistinctement caoutchouc) "diénique", on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères. Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4.

Le matériau textile selon l'invention est avantageusement utilisable pour le renforcement de pneumatiques de tous types de véhicules, en particulier véhicules tourisme ou véhicules industriels tels que Poids-lourd.

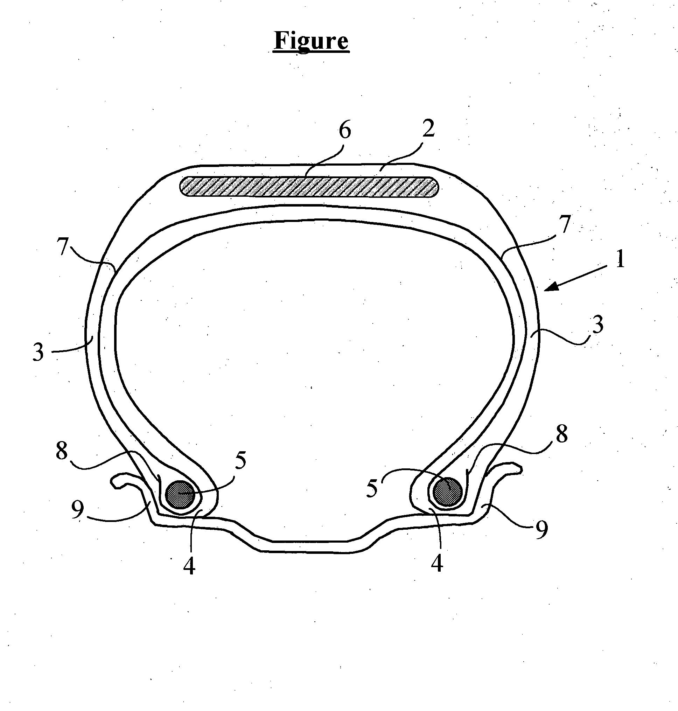

A titre d'exemple, la figure 1 annexée représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une armature de sommet (6) et/ou son armature de carcasse (7) comporte un composite de caoutchouc selon l'invention. Selon un autre exemple de mode de réalisation possible de l'invention, ce sont par exemple les tringles (5) et leurs bourrelets (4) qui pourraient être constitués, en tout ou partie, d'un composite selon l'invention.

Bien entendu, l'invention concerne les objets précédemment décrits, à savoir le composite en caoutchouc et le pneumatique le comportant, tant à l'état cru (avant cuisson ou vulcanisation) qu'à l'état cuit (après cuisson).

### EXEMPLES DE REALISATION DE L'INVENTION

### Essai 1 - Fabrication d'un matériau textile et composite selon l'invention

Dans cet essai, le matériau textile de départ est un retors ou câblé textile en polyamide 6-6, constitué de deux brins sous forme de fibre multifilamentaire ayant chacune un titre ou densité linéaire de 140 tex (soit 140 g/m), les deux brins étant retordus ensemble à 250 tours/mètre pour constituer ce que l'on a coutume d'appeler un retors.

On prépare une colle à partir de 7% en poids total de SBS époxydé (« Epofriend AT501 » de la société Daicel) plus PPE (« Xyron S202 » de la société Asahi Kasei), et 93% en poids de solvant toluène, en soumettant le tout à une agitation de 24 heures. Le rapport pondéral (PPE/ TPS insaturé) est égal à environ 0,4, le taux de PPE représentant environ une fois le taux pondéral de styrène dans l'élastomère SBS (soit 40% en poids de styrène dans l'élastomère SBS).

Une étape d'encollage par enduction est ensuite réalisée par passage du renfort textile ci-dessus dans un bac de colle sous dépression (aspiration), à une vitesse de passage de 5 m/min, sous une tension de 500 g et sans contact avec aucune poulie. En sortie de ce bain d'imprégnation, le câblé textile ainsi imprégné traverse un dispositif d'évacuation du solvant consistant en un tuyau en verre de 2 mètres de long dans lequel circule un contre-courant d'air en aspiration, pour séchage.

Puis le câblé textile ainsi revêtu et séché subit un traitement thermique final, par passage dans un four tunnel, pendant environ 50 s à une température de d'environ 290°C. Dans l'essai ci-dessus, pour déterminer les meilleures conditions opératoires du traitement thermique, on a réalisé préalablement un balayage en température de 200°C à 350°C, pour quatre durées de traitement (10 s, 20 s, 50 s et 100 s).

On obtient finalement un câblé textile encollé selon l'invention, dont le taux de revêtement adhésif (à l'état sec) représente environ 100 g pour 1000 g de matériau textile initial (non encollé). Ce câblé textile encollé selon l'invention est prêt à l'emploi, c'est-à-dire susceptible d'adhérer directement à une composition de caoutchouc réticulable telle qu'une composition de caoutchouc diénique, comme expliqué dans le paragraphe qui suit.

### Essai 2 - Tests d'adhésion

La qualité de la liaison entre le caoutchouc et le câblé textile précédemment fabriqué est ensuite appréciée par un test dans lequel on mesure la force nécessaire pour extraire des tronçons de câblés textiles, selon ou non l'invention, d'une composition de caoutchouc vulcanisée dit encore vulcanisat. Cette composition de caoutchouc est une composition conventionnelle utilisée pour le calandrage de nappes textiles d'armature carcasse de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les câblés textiles (15 tronçons au total) sont emprisonnés entre les deux plaques de caoutchouc à l'état cru, à égale distance et en laissant dépasser de part et d'autre de ces plaques une extrémité de câblé de longueur suffisante pour la traction ultérieure. Le bloc comportant les câblés est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 tronçons de câblés est mise en place dans les mâchoires d'une machine de traction adaptée pour permettre de tractionner chaque tronçon isolément hors du caoutchouc, à une vitesse et une température données (par exemple, dans le cas présent, à 50 mm/min et 20°C ou 100°C). On caractérise les niveaux d'adhésion en mesurant la force dite d'arrachage (notée Fₘₐₓ) pour arracher les renforts de l'éprouvette (moyenne sur 15 tractions).

On a constaté que, dans le composite de l'invention (constitué ici par le bloc vulcanisé), le câblé textile présentait une force d'arrachage Fₘₐₓ particulièrement élevée et inattendue, puisque augmentée d'environ 45% à 20°C et d'environ 20% à 100°C, par rapport à la force d'arrachage de référence mesurée sur un composite témoin renforcé d'un câblé textile rigoureusement identique mais encollé avec une colle conventionnelle RFL.

En conclusion, le composite en caoutchouc de l'invention, grâce à son matériau textile pourvu d'un revêtement adhésif spécifique, constitue une alternative particulièrement intéressante, compte tenu des très hauts niveaux d'adhésion au caoutchouc qui sont obtenus, aux composites de l'art antérieur renforcés de matériaux textiles encollés de manière connue par une colle du type RFL.

## Revendications

1. Composite de caoutchouc renforcé d'un matériau textile dont au moins une partie est revêtue d'une couche adhésive, **caractérisé en ce que** ladite couche comporte une composition adhésive qui est à base d'au moins un élastomère thermoplastique styrénique (en abrégé « TPS ») insaturé et un poly(p-phénylène éther) (en abrégé « PPE ») et ne comprenant pas de couche d'un polymère thermoplastique dont la température de transition vitreuse est positive entre le matériau textile et la couche adhésive.

2. Composite selon la revendication 1, dans lequel la température de transition vitreuse de l'élastomère TPS insaturé est négative, de préférence inférieure à -20°C.

3. Composite selon les revendications 1 ou 2, dans lequel l'élastomère TPS insaturé est un copolymère comportant des blocs styrène et des blocs diène.

4. Composite selon la revendication 3, dans lequel le taux de styrène de l'élastomère TPS insaturé est compris entre 10 et 60% en masse, de préférence dans un domaine de 15 à 55 % en masse.

5. Composite selon l'une quelconque des revendications 1 à 4, dans lequel les blocs diène de l'élastomère TPS insaturé sont des blocs isoprène ou butadiène.

6. Composite selon l'une quelconque des revendications 1 à 5, dans lequel l'élastomère TPS insaturé est porteur de groupes fonctionnels choisis parmi les groupes époxyde, carboxyle, anhydride d'acide ou ester d'acide.

7. Composite selon la revendication 6, dans lequel l'élastomère TPS insaturé est un élastomère TPS époxydé.

8. Composite selon la revendication 6 ou 7, dans lequel l'élastomère TPS insaturé est un copolymère SBS ou SIS, de préférence un copolymère SBS.

9. Composite selon l'une quelconque des revendications 1 à 8, dans lequel le PPE a une température de transition vitreuse supérieure à 150°C, de préférence supérieure à 180°C.

10. Composite selon l'une quelconque des revendications 1 à 9, dans lequel le PPE est le poly(2,6-diméthyl-1,4-phénylène-éther).

11. Composite selon l'une quelconque des revendications 1 à 10, dans lequel la matière du matériau textile est un polymère thermoplastique.

12. Composite selon la revendication 11, dans lequel le polymère thermoplastique est un polyamide aliphatique ou un polyester.

13. Composite selon l'une quelconque des revendications 1 à 12, consistant en un pneumatique.

14. Procédé de fabrication d'un composite de caoutchouc selon l'une quelconque des revendications 1 à 13, comportant au moins les étapes suivantes :
- combiner au moins une portion d'un matériau textile de départ tel que défini dans l'une quelconque des revendications 1 à 13, la composition adhésive étant à l'état solide, avec une composition de caoutchouc réticulable, pour former un composite de caoutchouc renforcé du matériau textile ;
- réticuler par cuisson le composite ainsi formé.

15. Utilisation, pour le collage d'un matériau textile à un caoutchouc insaturé dans un composite selon l'une quelconque des revendications 1 à 13, d'une composition adhésive à base d'au moins un élastomère thermoplastique styrénique (en abrégé « TPS ») insaturé et un poly(p-phénylène éther) (en abrégé « PPE »).

## Patentansprüche

1. Kautschukverbundwerkstoff, der mit einem Textilmaterial verstärkt ist, wobei mindestens ein Teil davon mit einer Klebstoffschicht beschichtet ist, **dadurch gekennzeichnet, dass** die Schicht auf mindestens einem ungesättigten thermoplastischen Styrolelastomer (abgekürzt "TPS"-Elastomer) und einem Poly(p-phenylenether) (abgekürzt "PPE") basiert, und keine Schicht aus einem thermoplastischen Polymer, dessen Glasübergangstemperatur positiv ist, zwischen dem Textilmaterial und der Klebstoffschicht umfasst.

2. Verbundwerkstoff nach Anspruch 1, wobei die Glasübergangstemperatur des ungesättigten TPS-Elastomers negativ ist und vorzugsweise unter -20°C liegt.

3. Verbundwerkstoff nach Anspruch 1 oder 2, wobei es sich bei dem ungesättigten TPS-Elastomer um ein Copolymer mit Styrolblöcken und Dienblöcken handelt.

4. Verbundwerkstoff nach Anspruch 3, wobei der Styrolgehalt des ungesättigten TPS-Elastomers zwischen 10 und 60 Gew.-% und vorzugsweise in einem Bereich von 15 bis 55 Gew.-% liegt.

5. Verbundwerkstoff nach einem der Ansprüche 1 bis 4, wobei es sich bei den Dienblöcken um Isopren- oder Butadienblöcke handelt.

6. Verbundwerkstoff nach einem der Ansprüche 1 bis 5, wobei das ungesättigte TPS-Elastomer wobei das Elastomer aus Epoxid-, Carboxyl-, Säureanhydrid- oder Säureestergruppen ausgewählte funktionelle Gruppen trägt.

7. Verbundwerkstoff nach Anspruch 6, wobei es sich bei dem ungesättigten TPS-Elastomer um ein epoxidiertes TPS-Elastomer handelt.

8. Verbundwerkstoff nach Anspruch 6 oder 7, wobei es sich bei dem ungesättigten TPS-Elastomer um ein SBS- oder SIS-Copolymer, vorzugsweise ein SBS-Copolymer, handelt.

9. Verbundwerkstoff nach einem der Ansprüche 1 bis 8, wobei der PPE eine Glasübergangstemperatur von mehr als 150°C, vorzugsweise mehr als 180°C, aufweist.

10. Verbundwerkstoff nach einem der Ansprüche 1 bis 9, wobei es sich bei dem PPE um Poly(2,6-dimethyl-1,4-phenylenether) handelt.

11. Verbundwerkstoff nach einem der Ansprüche 1 bis 10, wobei es sich bei der Materie des Textilmaterials um ein thermoplastisches Polymer handelt.

12. Verbundwerkstoff nach Anspruch 11, wobei es sich bei dem thermoplastischen Polymer um ein aliphatisches Polyamid oder einen Polyester handelt.

13. Verbundwerkstoff nach einem der Ansprüche 1 bis 12, der aus einem Reifen besteht.

14. Verfahren zur Herstellung eines Kautschukverbundwerkstoffs nach einem der Ansprüche 1 bis 13, das mindestens folgende Schritte umfasst:
- Kombinieren von mindestens einem Teil eines Ausgangstextilmaterials gemäß einem der Ansprüche 1 bis 13 und der Klebstoffzusammensetzung in festem Zustand mit einer vernetzbaren Kautschukzusammensetzung zur Bildung eines mit dem Textilmaterial verstärkten Kautschukverbundwerkstoffs;
- Vernetzen des so gebildeten Verbundwerkstoffs durch Härten.

15. Verwendung einer Klebstoffzusammensetzung auf Basis von mindestens einem ungesättigten thermoplastischen Styrolelastomer (abgekürzt "TPS"-Elastomer) und einem Poly(p-phenylenether) (abgekürzt "PPE") zum Verkleben eines Textilmaterials mit einem ungesättigten Kautschuk in einem Verbundwerkstoff nach einem der Ansprüche 1 bis 13.

## Claims

1. Rubber composite reinforced with a textile material, at least one portion of which is coated with an adhesive layer, **characterized in that** said layer comprises an adhesive composition which is based on at least one unsaturated thermoplastic styrene (abbreviated to "TPS") elastomer and a poly(*p*-phenylene ether) (abbreviated to "PPE") and said layer does not comprise any layer of a thermoplastic polymer with a positive glass transition temperature between the textile material and the adhesive layer.

2. Composite according to Claim 1, in which the glass transition temperature of the unsaturated TPS elastomer is negative, preferably below -20°C.

3. Composite according to Claim 1 or 2, in which the unsaturated TPS elastomer is a copolymer comprising styrene blocks and diene blocks.

4. Composite according to Claim 3, in which the styrene content of the unsaturated TPS elastomer is between 10% and 60% by weight, preferably in a range from 15% to 55% by weight.

5. Composite according to any one of Claims 1 to 4, in which the diene blocks of the unsaturated TPS elastomer are isoprene or butadiene blocks.

6. Composite according to any one of Claims 1 to 5, in which the unsaturated TPS elastomer bears functional groups selected from epoxide, carboxyl and acid anhydride or ester groups.

7. Composite according to Claim 6, in which the unsaturated TPS elastomer is an epoxidized TPS elastomer.

8. Composite according to Claim 6 or 7, in which the unsaturated TPS elastomer is an SBS or SIS copolymer, preferably an SBS copolymer.

9. Composite according to any one of Claims 1 to 8, in which the PPE has a glass transition temperature above 150°C, preferably above 180°C.

10. Composite according to any one of Claims 1 to 9, in which the PPE is poly(2,6-dimethyl-1,4-phenylene ether).

11. Composite according to any one of Claims 1 to 10, in which the substance of the textile material is a thermoplastic polymer.

12. Composite according to Claim 11, in which the thermoplastic polymer is an aliphatic polyamide or a polyester.

13. Composite according to any one of Claims 1 to 12, consisting of a tyre.

14. Process for manufacturing a rubber composite according to any one of Claims 1 to 13, comprising at least the following steps:
- combining at least one portion of a starting textile material as defined in any one of Claims 1 to 13, the adhesive composition being in the solid state, with a crosslinkable rubber composition, in order to form a rubber composite reinforced with the textile material;
- crosslinking the composite thus formed by curing.

15. Use, for the adhesive bonding of a textile material to an unsaturated rubber in a composite according any one of Claims 1 to 13 of an adhesive composition which is based on at least one unsaturated thermoplastic styrene (abbreviated to "TPS") elastomer and a poly(*p*-phenylene ether) (abbreviated to "PPE").
